**Europäisches Patentamt**

**European Patent Office**

**Office européen des brevets**

(19)

(11) Veröffentlichungsnummer: **0 048 959**
A2

(12) **EUROPÄISCHE PATENTANMELDUNG**

(21) Anmeldenummer: **81107597.7**

(22) Anmeldetag: **24.09.81**

(51) Int. Cl.³: **E 02 D 5/38**, E 02 D, 3/10, **C 09 K 17/00**

(30) Priorität: **29.09.80 DE 3036628**
**06.02.81 DE 3104170**

(71) Anmelder: **Helmdach, Günter, Auf der Brede 49, D-5608 Radevormwald (DE)**

(43) Veröffentlichungstag der Anmeldung: **07.04.82 Patentblatt 82/14**

(84) Benannte Vertragsstaaten: **CH DE FR GB LI NL SE**

(72) Erfinder: **Helmdach, Günter, Auf der Brede 49, D-5608 Radevormwald (DE)**

(54) Lastaufnehmendes Gründungselement, insbesondere aus Stahlbeton.

(57) Lastaufnehmende Gründungselemente aus insbesondere Stahlbeton müssen widerstandsfähig gegen Einwirkungen feuchten Baugrundes gemacht werden.

Um dies zu erreichen ist in einem an den Baugrund angrenzenden Bereich ein Drainagekörper vorhanden, der gegen chemische und biologische Zersetzung widerstandsfähig ist.

EP 0 048 959 A2

ACTORUM AG

0048959

---

Günter Helmdach, Auf der Brede 49, 5608 Radevormwald

===========================================================

Lastaufnehmendes Gründungselement, insbesondere aus Stahlbeton.

Die Erfindung bezieht sich auf ein lastaufnehmendes
Gründungselement, insbesondere aus Stahlbeton, das in
feuchten Baugrund einzubringen oder zu errichten ist.
Für Bauwerksgründungen ist es allgemein bekannt, in unzureichendem Baugrund Gründungspfähle zu errichten, die als
Stützelemente die Aufgabe haben, die Stützlasten zu übernehmen
und in den Baugrund abzutragen. Dafür werden insbesondere
Stahlbetonpfähle verwendet, die in Form von Ortbeton-,
Ramm- oder Fertigteilpfählen zum Einsatz gelangen. Dabei hat
der Stahlbeton als druckfester und gleichzeitig biegesteifer
Werkstoff ständig wachsende Bedeutung als Gründungselement
auch in solchen Gebieten erlangt, in denen der Baugrund so
beschaffen ist, daß er den Beton chemischen und biologischen Angriffen aussetzt, die seine Dauerbeständigkeit erheblich beeinträchtigen. In diesen Fällen ist es
daher notwendig, besondere Schutzmaßnahmen vorzusehen,
um den Beton gegen solche chemischen und biologischen
Angriffe widerstandsfähig zu machen. So ist es schon seit
langem zum Schutz von Fundamenten, insbesondere bei Flachgründungen, bekannt, Beton-Anstriche oder -beschichtungen
vorzunehmen, die aus den verschiedenartigsten Stoffen
bzw. Stoffkombinationen, wie z. B. Bitumen-, Bitumen-
Latex-, Teer- und Kunststoff-Teer-Mischungen bestehen.
Derartige Beschichtungen gewährleisten aber nur einen bedingten Betonschutz, zumal sie nicht selten mechanischen
Beschädigungen ausgesetzt sind und dann an den schadhaften bzw. rissigen Stellen unwirksam werden. Darüber hinaus
schützen die bekannten Betonbeschichtungen Gründungspfähle in feuchtem Baugrund nicht gegen aus letzterem austretendes Porenwasser, das insbesondere bei dynamischen Beanspruchungen der Gründungspfähle in erheblichem Umfange
auftritt und zu entsprechendem Lockerwerden der Pfähle führt.

Der Erfindung liegt daher die Aufgabe zugrunde, ein
insbesondere aus Stahlbeton bestehendes Gründungselement der
eingangs genannten Art zu schaffen, welches wirksam sowohl
gegen chemische und biologische Zersetzung, als auch gegen
die in ihrem Umgebungsbereich insbesondere bei bindigen
oder Sandböden zustandekommende Bodenverflüssigung geschützt ist.

Diese Aufgabe wird erfindungsgemäß dadurch gelöst, daß
es in einem an den Baugrund angrenzenden Bereich einen gegen chemische und biologische Zersetzung widerstandsfähigen Drainagekörper hat.

Mit Hilfe dieses Drainagekörpers kann die Feuchtigkeit des Bodens, also anfallendes Wasser und insbesondere
auch Porenwasser abgeführt werden. Das Abführen des Wassers
erfolgt in den Drainagekörper und/oder den örtlichen Bodengegebenheiten entsprechend, indem die Flüssigkeit beispielsweise durch bereits vorhandene wasserleitende Bodenschichten
abgeführt wird, z. B. durch Kiesschichten, oder indem besondere
die Ableitung des Wassers bewirkende Drainageschichten an den
Drainagekörper angeschlossen werden. Die Ausbildung des
Drainagekörpers und etwa zu errichtender, an diesen anschließender Wasserableitungseinrichtungen hängt von der
Gestaltung des Gründungselements ab. Dieses kann beispielsweise
als Pfahl oder Säule ausgebildet werden, welche auf Druck oder
gegebenenfalls auch auf Zug belastet werden. Das Gründungselement kann jedoch aber auch als Zuganker ausgebildet werden,
um der Bodenbefestigung bzw. Stützwandverankerung zu dienen.
In allen Fällen kann der Drainagekörper nicht nur dazu dienen,
anfallendes Wasser zuverlässig abzuleiten, sondern er kann auch
eine größere Haftung des Gründungselements im Baugrund
herbeiführen. Dies erfolgt insbesondere bei einer kraftübertragenden Verbindung zwischen dem Gründungselement und dem
Drainagekörper, wenn dieser eine erhöhte Reibung mit dem
Baugrund zu bewirken vermag, als es das Gründungselement kann.
Dies wird aber auch dadurch bewirkt, daß der Baugrund durch die
Drainage entwässert werden und sich damit setzen kann, also

0048959

eine größere Belastbarkeit erhält. Letzteres ist insbesondere für die Zugankerverwendung und/oder Bodenarmierung von Bedeutung, aber auch zur Stabilierung von Gleitzonen.

Als Drainagekörper kommen in der allgemeinsten Ausbildung des Gründungselementes z. B. eine Kiesschicht oder ein wasserableitender Gitterkörper in Betracht, wobei dieser Drainkörper z. B. aus Kunststoffasern bestehen kann. Der Baugrund wird aber häufig so beschaffen sein, daß der Drainagekörper geschützt werden muß, und zwar gegen mechanische Beeinträchtigung durch grobe Bodenstrukturen oder gegen Einschlemmen feiner Bodenbestandteile, welche die Drainagewirkung beeinträchtigen können. In Ausgestaltung der Erfindung besitzt das Gründungselement daher ein Schutzrohr mit einem wasserdurchlässigen Außenrohrmantel und in einem zwischen diesem und dem insbesondere als Pfahl ausgebildeten Gründungselement vorhandenen Zwischenraum ist der Drainagekörper als Füllung offenporiger Struktur vorhanden.

Um den Elementkern des Gründungselementes vollständig vom Wasser abzuschirmen, ist zwischen dem Drainagekörper bzw. der Füllung und dem Elementkern des Gründungselements ein wasserundurchlässiger Innenrohrmantel angeordnet. Als besonders zweckmäßig hat es sich dabei erwiesen, wenn die zwischen dem Innen- und dem Außenrohrmantel vorhandene Füllung offenporig erhärtetes Polyurethanharz, vorzugsweise aus durch Reaktion eines Polyalkohols mit einem Isocyanat entstandenes, oder ein anderes Kunstharzbindemittel enthält. Vorzugsweise besteht die Füllung aus offenporig erhärtetem Polyurethan oder anderem

0048959

Bindemittel bzw. Kunstharzmörtel und körnigen Mineralstoffen.

Ein derart beschaffener, mit einem vorbeschriebenen
ein- oder doppelwandigen Schutzrohr versehener Beton-Gründungspfahl ist wirksam gegen chemische und biologische Agressionen
geschützt. Zugleich wird dadurch der im Umgebungsbereich
solcher Gründungspfähle auftretenden Bodenverflüssigung wirksam
dadurch begegnet, daß das insbesondere bei dynamischen
Beanspruchungen solcher Pfähle anfallende Wasser infolge
Porenwasserüberdrucks (liquifaction) durch den perforierten
Außenrohrmantel hindurch in die offenporig strukturierte
Füllmasse gelangen und von dieser aufgenommen sowie gegebenenfalls weitergeleitet werden kann, wodurch der Pfahl in seinem
eigentlichen Gründungsbereich seinen festen Sitz bzw. Standfestigkeit beibehält. Die Füllung ist so strukturiert bzw.
beschaffen, daß ihr Wasseraufnahme- bzw. -durchflußvermögen
auch nicht etwa durch elektrochemische Dipol-Bindung behindert
wird, also keine entsprechende Wasserpfropfbildung entsteht,
durch die die Aufnahme des Porenwasserüberdrucks aus dem Boden
in der Füllung blockiert werden könnte. Da mit dieser Füllung
zugleich eine haftfeste Verbindung zwischen dem Innen-
und Außenrohrmantel gegeben ist, gegebenenfalls über Stege oder
Distanzhalter, bildet das Schutzrohr ein biegesteifes Element
(Sandwich-Element), das sich je nach Beschaffenheit des
Mantelrohrmaterials sowohl im Rammbohrverfahren als auch durch
Vibration bei gleichzeitiger Druckanwendung in den Boden
eintreiben läßt.

Der Innen- und/oder Außenrohrmantel bestehen vorteilhaft aus insbesondere armiertem Kunststoff, z. B. aus glasoder carbon- oder aromatisches polyamidfaserverstärktem Polyäthylen, Polyester, Epoxyd- oder Polyurethanharz.

Nach einem weiteren Merkmal der Erfindung kann das Gründungselement im Bereich seines Drainagekörpers oder die Füllung enthaltenden Zwischenraums vorteilhaft mit Injektionskanälen versehen sein, die in bestimmten Abständen durch einen - etwa vorhandenen - Außenrohrmantel hindurchgehen und auch einen eine Gründungspfahlspitze aufnehmenden Bereich des Innenrohrmantels durchsetzen können. Mit Hilfe dieser Injektionskanäle und einer durch sie hindurchzuführenden, geeigneten Injektionsflüssigkeit, insbesondere ebenfalls offenporig erhärtendes Polyurethan oder andere Kunstharze oder kunststoffvergüteter Zement bzw. Zementmörtel, kann eine zusätzliche Verankerung des Betonpfahl-Schutzrohres sowohl im Mantel- als auch Sohlbereich erzielt werden, wodurch einerseits auch die Standsicherheit durch erhöhte Mantelreibung verbessert und zum anderen eine Verpressung des Bodens zur Verhinderung des Durchstampfens im Sohlbereich erreicht werden kann.

Vorteilhafterweise hat das Schutzrohr als Außenrohrmantel mindestens eine wasserdurchlässige mikroporige Filtervliesschicht und als Füllung offenporiger Struktur mindestens einen innerhalb dieser Vliesschicht angeordneten, damit zu einem Bauelement verbundenen gröberporigen Drainkörper und ist bedarfsweise von einer weiteren solchen Vliesschicht mit Drainkörper umgeben, oder ein doppelwandiges Schutzrohr ist zusätzlich von einer solchen Vliesschicht mit Drainkörper umgeben. Bei den vorbeschriebenen Ausführungsbeispielen werden sandwichartige Bauelemente verwendet, die aus einer wasserdurchlässigen mikroporigen Filtervliesschicht und einem damit verbundenen Drainkörper bestehen. Die Filtervliesschicht verhindert weitgehend das Eindringen von Bodenteilchen in den Drainkörper, der das durch die Filtervliesschicht gelangende Wasser abführt. Diese sandwichartigen Bauelemente können auf verschiedene Weise eingebaut werden, z. B. mit einem Rammrohr, in dessen freies Innere ein mit einem Innenrohrmantel versehenes Bauelement eingesetzt wird, wonach im Innenraum des Innenrohrmantels der Beton eingebracht wird. Bei der Verwendung von Fertigpfählen brauchen diese lediglich mit einem Vlies/Drainkörper-Bauelement nach Art eines Strumpfes überzogen und in das Innere des Rohres eingeführt zu werden, falls auf die Abschirmung des Betons durch das Innenrohr verzichtet werden kann. Es ist auch möglich, ein Doppelrohr zum Einrammen zu verwenden, in dessen Zwischenraum das Vlies/Drainkörper-Bauelement eingeführt wird, wonach Ortbeton unter Herausziehen des Rammrohres eingefüllt wird.

Das Außenmantelrohr kann an seinem Außenumfang zweckmäßig noch mit einer Profilierung, insbesondere in Form eines Schraubengewindes versehen sein. Dadurch kann das Schutzrohr gleichsam nach Art eines Bohrers bei seinem Eintreiben in den Baugrund zugleich gedreht und damit leichter eingetrieben werden. Andererseits wird durch die

0048959

außen vorhandene Profilierung eine noch größere Stand- und Auszugfestigkeit erreicht.

Die Herstellung der erfindungsgemäß beschaffenen Schutzrohre, insbesondere wenn sie mit Injektionskanälen versehen werden, erfolgt zweckmäßig werkstatt- bzw. fabrikmäßig, so daß solche Schutzrohre als Fertigteile auf die Baustelle gelangen und dort in die entsprechend ausgehobenen Aufnahmelöcher eingesetzt bzw. eingetrieben werden können, wobei dann der betreffende Beton-Gründungspfahl in aller Regel nachträglich im Innenraum des Innenrohrmantels hergestellt bzw. eingetrieben wird. Es ist dabei aber auch möglich, das Schutzrohr bereits vorher über den fertigen Betonpfahl zu schieben und dann gemeinsam mit letzterem in das Bodenloch einzubringen.

Der erfindungsgemäß beschaffene Gründungspfahl kann aber auch erst am Einsatzort hergestellt werden, beispielsweise indem in ein im Baugrund durch Aushub oder einen Stahlrammpfahl hergestelltes Aufnahmeloch von dem Außenrohrmantel etwa entsprechendem Durchmesser das Außenmantelrohr und das gegebenenfalls durch Distanzhalter abzustützende Innenmantelrohr eingebracht und danach in den zwischen den beiden Mantelrohren vorhandenen Zwischenraum die offenporige bzw. offenporig erhärtende Füllung eingebracht wird. Sobald diese dann hinreichend erhärtet ist, kann in das Innere des Innenrohrmantels die Betonmasse eingefüllt werden. Vor dem Einbringen des Schutzrohrs in das Aufnahmeloch kann letzteres an seinem Boden auch noch mit Schotter oder einem sonstigen grobkörnigen Mineralstoff angefüllt werden, der dann beim nachträglichen Einbringen der Füllmasse von ihr zusätzlich durchsetzt und entsprechend verfestigt wird, wodurch ein Pfahlfuß hergestellt wird, der ein Durchstampfen sicher verhindert.

In Ausgestaltung der Erfindung ist in das Schutzrohr ein sich als isotroper Körper verhaltender Beton eingefüllt, der entweder zement- und/oder kunstharzgebunden ist. Ein anisotroper Beton überträgt infolge seiner Struktur die Auflagelasten bzw. im Falle seines Einrammens die Rammlasten ungleichmäßiger auf das den Gründungspfahl wesentlich biegeversteifende Schutzrohr, als isotroper Beton, der bei hoher Belastung aus dieser herrührende Radialkräfte gleichmäßig auf das Schutzrohr überträgt, das bei entsprechender Abstimmung damit zu einer wesentlich erhöhten Biegesteifigkeit des Gründungspfahls beitragen kann.

Derartige Gründungselemente und insbesondere Gründungspfähle sind als aktive und passive Bauelemente gut geeignet. Sie vermögen also vertikale und damit verbundene bzw. daraus entstehende Horizontalkräfte auf den Baugrund zu übertragen, sie vermögen aber auch z. B. infolge von Bodenverschiebungen herrührende Horizontalkräfte zu ertragen, wobei das Schutzrohr einen die Biegesteifigkeit wesentlich vergrößernden Beitrag liefert.

Besonders vorteilhaft ist die gruppenweise Verwendung von vorstehend beschriebenen Gründungselementen, um bewegungsgefährdete Böden zu stabilisieren. Diese in Gruppenanordnung verwendeten Gründungselemente können sowohl zur Abtragung vertikaler Lasten als aktive Gründungselemente eingesetzt werden, wie auch zur Aufnahme horizontaler Lasten z. B. durch Pfahlkopfverschiebung oder horizontale Bodenbewegung dienen. Als Pfahlkonstruktion dienen sie zur Verwendung als Drainage- und/oder Dübelelement zur Sicherung bzw. Stabilisierung rutschgefährdeter Böden oder Hänge. Insbesondere Pfahlbündel mit unten ausgestellten Pfahlenden bzw. entsprechend schräggestellten Einzelpfählen vermeiden die sonst bei Bodenverflüssigung auftretenden Nachteile. Solche Pfahlbündel haben eine vergleichsweise große vertikale Projektionsfläche und bieten daher den Vorteil, Last kaum noch über die Pfahlspitzen abtragen zu müssen bzw. eine schwimmende Anordnung zu bilden.

Des weiteren können solche Elemente bzw. Pfähle auch vorteilhaft bei Wasserbauwerken eingesetzt werden, z. B. bei der Errichtung von Offshore-Bauwerksgründungen. In diesem Bereich besteht das Problem, eine Gründungsplatte zur Abtragung der Last eines Bauwerkspfeilers lagegenau anzuordnen, was infolge der unterschiedlichen Bodenbeschaffenheit Schwierigkeiten bereitet. Zur Lösung dieses Problems kann die Bodenplatte auf ihrer Unterseite mit erfindungsgemäßen Pfählen versehen werden, welche eine Drainage des Porenaustrittswassers aus einer Bodenschicht in eine andere Bodenschicht oder durch in der Bodenplatte vorgesehene Ableitungsöffnungen ermöglichen. Bei einem Gründungselement, welches als Platte, Streifen od.dgl. und insbesondere mit Bodendübeln oder -Pfählen ausgebildet ist, sind in Ausgestaltung der Erfindung an seiner Unter- oder Außenseite eine oder mehrere kunstfaserverstärkte Kunstharzschichten vorhanden, an deren Außenseite ein beidseitig vliesbeschichteter Drainagekörper angeordnet ist. Diese erfindungsgemäße Platte ist infolge ihrer Bewehrung in erhöhtem Maße biegesteif. Sie eignet sich daher insbesondere für Flachgründungen, bei denen angenommen werden muß, daß eine Verbiegung der Platte zu einer daraus resultierenden Bauwerksverlagerung führt. Verbiegungen der Platte sind z. B. bei durch Felseinlagerungen inhomogenen Böden und größeren Plattenmessungen zu befürchten. Daraus resultierende Bauwerksverlagerungen können z. B. bei Hochbauten und auch bei den obenerwähnten Offshore-Bauwerken zu katastrophahlen Folgen führen. Die Unterseite der Bodenplatte wird zusätzlich direkt drainiert, damit auch noch die Wirkungen des plattenunterseitigen Porenaustrittswassers vermieden werden.

In der Zeichnung sind mehrere Ausführungsbeispiele von erfindungsgemäß beschaffenen Gründungselementen und ihre Einsatzweise dargestellt. Dabei zeigt:

Fig. 1 ein als Fertigteil fabrikmäßig hergestelltes Schutzrohr in senkrechtem Längsschnitt,

Fig. 2 einen Schnitt nach der Linie II-II der Fig. 1,

Fig. 3 eine geschnittene Teilansicht eines Bodenaufnahmelochs mit darin eingesetztem Schutzrohr, bereits eingefülltem Injektionsmittel und anfänglicher Betonmasse-Befüllung,

Fig. 4 und 5 jeweils Schnitte durch im Boden errichtete Beton-Gründungspfähle mit Schutzrohr-

Umhüllung und

0048959

Fig. 6 eine schematische Querschnittsdarstellung durch einen Teil eines als Platte ausgebildeten Gründungselements.

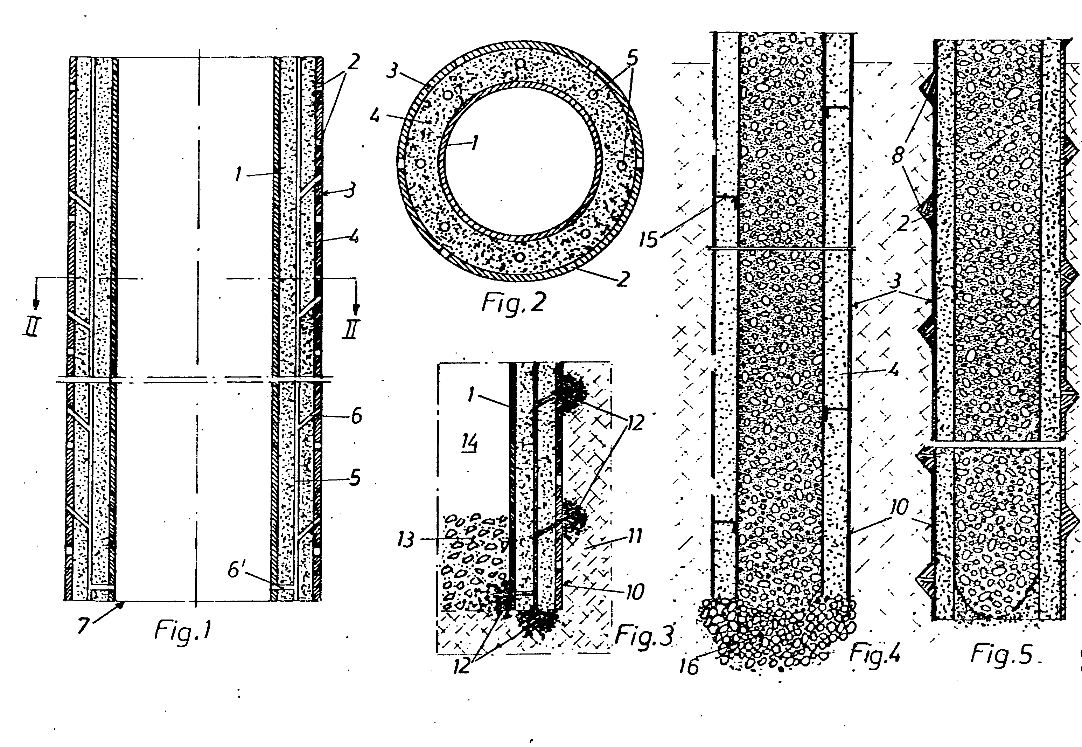

Das in den Fig. 1 und 2 dargestellte Schutzrohr ist
doppelwandig ausgebildet. Es besitzt einen feuchtigkeitsundurchlässigen Innenrohrmantel 1 und einen mit Perforationen 2, z.B. Löchern oder Schlitzen versehenen Außenrohrmantel 3. Beide Rohrmäntel 1,3 bestehen vorteilhaft
aus armiertem Kunststoff, z.B. aus glas- oder carbon-
oder aromatisches polyamidfaserverstärktem Polyester, Polyäthylen, Epoxyd- oder Polyurethanharz. Sie sind von hinreichender Wandstärke, um entsprechenden Festigkeitsansprüchen zu genügen. Der zwischen den beiden Rohrmänteln
1, 3 vorhandene Zwischenraum ist mit einer gegen chemische
und biologische Zersetzung widerstandsfähigen Masse 4 gefüllt,
die eine offenporige Struktur besitzt. Vorzugsweise dient
dazu offenporig erhärtetes Polyurethan, das durch Reaktion
eines Polyalkohols mit einem Isocyanat entstanden ist. Diesem
Polyurethan können zweckmäßig auch noch körnige Mineralstoffe als Füllstoffe zugesetzt sein, die aber die
offenporige Struktur der Füllung 4 nicht beeinträchtigen
dürfen. In dem die Füllung 4 enthaltenden Zwischenraum
sind vorzugsweise mehrere, gleichmäßig über den Umfang
des Schutzrohres verteilte Injektionskanäle 5 vorgesehen,
von denen seitliche Zweigkanäle 6 abzweigen, die durch das
Außenmantelrohr 3 hindurch nach außen gehen. Weitere Zweigkanäle 6' können auch im unteren, die Gründungspfahlspitze
aufnehmenden Bereich 7 des Schutzrohres vorhanden sein, die dabei durch den Innenrohrmantel 1 hindurchgehen. Während für die Herstellung der axial verlaufenden Injektionskanäle 5 zweckmäßig verbleibende Rohre verwendet werden, können die Querkanäle 6, 6' einfach gebohrt werden.

Wie in Fig. 5 dargestellt, kann das Außenmantelrohr 3 außen noch mit einer Profilierung versehen sein, insbesondere in Form eines Schraubengewindes 8, wodurch dieses Mantelrohr nicht nur eine entsprechende Verstärkung erfährt, sondern das Schutzrohr dadurch beim Eintreiben in das Bodenaufnahmeloch 10 auch eine entsprechende Drehbewegung erfährt und dadurch leichter darin eingebracht werden kann.

Wie Fig. 3 veranschaulicht, kann das als fabrikmäßiges Fertigteil hergestellte Schutzrohr nach seinem Einbringen in das entsprechend ausgehobene oder auch durch einen Rammpfahl erzeugte Aufnahmeloch 10 im Bodenumgebungsbereich 11 noch zusätzlich durch über die Injektionskanäle 5, 6 ,6' eingedrückte Injektionsflüssigkeit, insbesondere gleichfalls offenporig erhärtendes Polyurethan, zusätzlich verfestigt werden, wobei sich in der Umgebung der Austrittsstellen der Injektionskanäle entsprechend verfestigte Injektionswurzeln bzw. -ballen 12 bilden. Nach dem so erfolgten Einbringen des Schutzrohres und dessen zusätzlicher Verwurzelung durch die Injektionsballen 12 kann mit dem Einfüllen der Betonmasse 13 in den vom Innenrohrmantel 1 umgebenen Innenraum 14 begonnen werden, nachdem zuvor darin gegebenenfalls eine entsprechende Stahlarmierung errichtet worden ist.

Wie Fig. 4 zeigt, kann das Schutzrohr auch erst am Einsatzort errichtet werden, beispielsweise in der Weise, daß in das entsprechend beschaffene Bodenloch 10 zunächst der Außenrohrmantel 3 eingesetzt bzw. eingetrieben wird und danach das gegebenenfalls mit entsprechenden Distanzhaltern 15 versehene Innenmantelrohr 1 konzentrisch eingesetzt wird. Diese Distanzhalter können im Falle der Biegebeanspruchung des Gründungspfahles auch der Kraftübertragung zwischen dem Außen- und dem Innenmantelrohr dienen, falls die Füllung 4 eine derartige Kraftübertragung nicht vorzunehmen vermag, ohne die erforderliche Drainfunktion zu verlieren. Dabei ist es zweckmäßig, wenn die Distanzhalter an ihren Enden jeweils Vertikalstege zur besseren Kraftübertragung haben. Zuvor kann zur Verbesserung der Pfahlspitzengründung der Boden des Aufnahmelochs 10 noch mit grobkörnigem Füllmaterial, wie z.B. Schotter 16 angefüllt werden. Nachdem beide Mantelrohre 1, 3 richtig gesetzt sind, wird mit der Befüllung des zwischen ihnen vorhandenen Ringraumes begonnen, wobei also das offenporig erhärtende Zweikomponenten-Polyurethan zweckmäßig zusammen mit anderen grobkörnigen Füllstoffen eingefüllt wird. Ein Teil des porig erhärtenden Polyurethans dringt dabei auch in die Schotter-Füllung 16 ein, die dadurch eine entsprechende Verfestigung erfährt. Nach dem Erhärten der Füllmasse 4 kann mit dem Einfüllen des Betons 13 begonnen werden.

Es versteht sich, daß bei entsprechend tiefen Aufnahmelöchern 10 im Baugrund gegebenenfalls auch mehrere Schutzrohre übereinander stumpf aufeinander gesetzt werden können, wobei man zur Zentrierung der Schutzrohre zweckmäßigerweise die Stoßstellen außen mit entsprechenden Zentrierbandagen und innen mit entsprechenden Dichtungsbandagen versehen kann.

Für die vorliegende Erfindung ist in allen Fällen wesentlich, daß die im Außenmantelrohr 3 vorhandenen Perforationen 2 einen hinreichenden Wasserdurchgang zu der im Schutzrohrinneren vorhandenen offenporigen Füllmasse-Struktur ermöglichen, damit diese ihre wasseraufnehmende und -weiterleitende Funktion erfüllen kann, um das Porenaustrittswasser aus dem Boden aufzunehmen. Zugleich schützt diese Füllung in Verbindung mit dem wasserundurchlässigen Innenrohrmantel 1 den Beton-Gründungspfahl gegen chemische und biologische Zersetzung. Insgesamt kommt man damit zu einer Betonpfahlgründung, die von ungewöhnlicher Festigkeit und Beständigkeit ist sowie auch dynamischen Beanspruchungen durch Abbau des zur Bodenverflüssigung führenden Porenwasserüberdruckes aus dem umgebenden Bodenbereich dauerhaft gewachsen ist.

Im Rahmen der vorliegenden Erfindung sind mancherlei Abwandlungen möglich. So kann beispielsweise als Außenrohrmantel 3 auch die äußere Hüllschicht der offenporig erhärteten Füllung 4 dienen, in diesem Fall also auf einen besonderen Außenrohrmantel verzichtet werden. Das gilt sowohl für die fabrikmäßige Herstellung eines Fertig-Schutzrohres als auch für dessen Herstellung erst am Einsatzort, wo in das betreffende Bodenaufnahmeloch beispielsweise zunächst der Innenrohrmantel eingebracht und dann der zwischen letzterem und der Bodenlochwandung vorhandene Ringraum mit der offenporig strukturierten bzw. erhärtenden Füllung versehen wird. Weiterhin müssen der Außenrohrmantel 3 bzw. die an seine Stelle tretende Hüllschicht nicht unbedingt zylindrisch verlaufen. Vielmehr ist auch ein konischer, sich nach unten verjüngender Verlauf möglich, der noch dazu den Vorteil besser Seitendruckabtragung bringt.

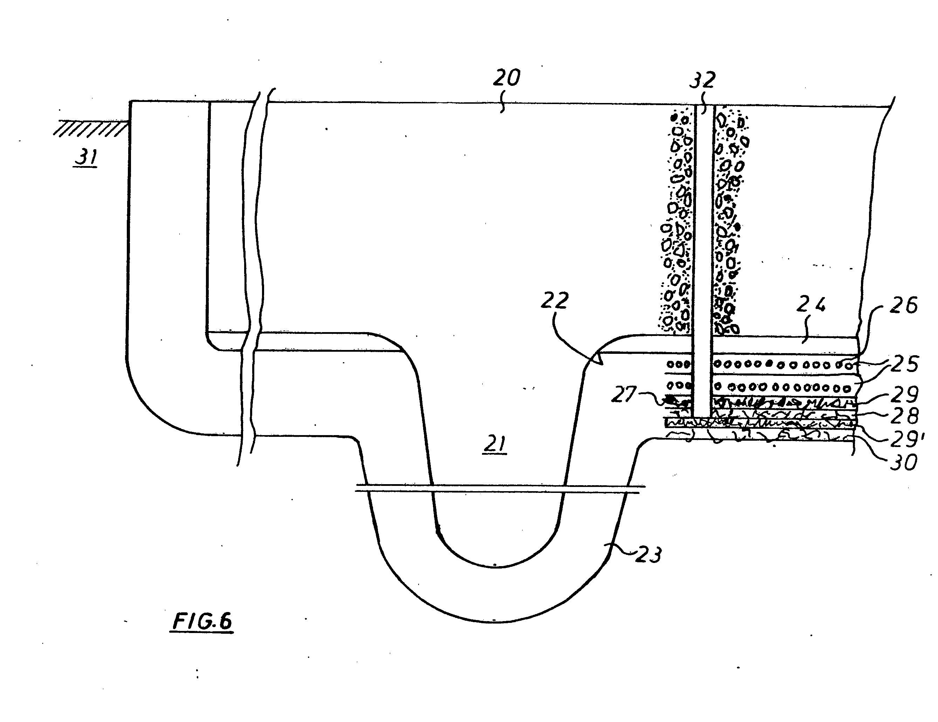

Das in Fig. 6 dargestellte Gründungselement ist eine für Flachgründungen vorgesehene Platte. Sie hat einen Plattenkörper 20, der unterseitig mit einem Pfahl 21 versehen ist. Derartige Pfähle sind beispielsweise bei Offshore-Bauwerksgründungen notwendig, um die Lage der Bodenplatte bei ihrem Absenken auf bzw. in den oft inhomogenen und wenig tragfähigen Boden zu gewährleisten. Dabei hängt die Länge der Pfähle von der Bodenbeschaffenheit ab, kann also bei festeren Bodenstrukturen kürzer gehalten werden. Es sind also je nach Bodenbeschaffenheit Pfähle bis zu mehreren Metern möglich. An der Unterseite 22 der Platte ist eine insgesamt als Bewehrung 23 bezeichnete Umkleidung vorhanden, deren Aufbau im rechten Teil der Fig. 6 näher erläutert ist. Die Verbindung dieser Bewehrung 23 mit der Platte 20 erfolgt vorzugsweise über eine Verzahnung 24 welche die erforderliche Scherfestigkeit der Verbindung beider Teile bei Biegebelastung gewährleistet, wenn die Pfähle 21 hierzu nicht ausreichen.

Die Bewehrung 23 hat zunächst zwei Kunstharzschichten 25, welche kunstfaserverstärkt sind. Die Kunstfaserverstärkung 26 ist punktiert angedeutet und wird durch Gewebe oder Stränge gebildet, welche die erforderliche Zugfestigkeit haben. Diese Kunstharzschichten übernehmen Biegebelastungen der Platte, da sie in hohem Maße zugfest sind. Die Kunstharzschichten können auch an den Seitenwänden der Platte vorhanden sein, damit dort die aus der Plattenunterseite herrührenden Zugbelastungen an der Platte abgefangen werden können. Eine seitlich hochgezogene Bewehrung hat den Vorteil, daß die gesamte Bewehrung 23 vorgefertigt werden kann (prepeg) und dann als Form für die durch Eingießen von Beton in diese Form fertigzustellende Platte dienen kann. Auf diese Weise lassen sich Platten vorteilhaft fabrikmäßig vorfertigen. Entsprechende fabrikmäßige Vorfertigung ist auch bei den zuvor beschriebenen Gründungselementen möglich und angeraten, soweit dies nicht zu Transportproblemen führt.

An der Unter- bzw. Außenseite 27 der Kunstharzschicht 25 ist ein Drainagekörper 28 vorhanden, der beidseitig mit Vliesschichten 29, 29' versehen ist. Die obere bzw. innere Vliesschicht 29 dient der Verbindung des Drainagekörpers 28 mit der Kunstharzschicht 25, während die untere bzw. äußere Vliesschicht 29' verhindert, daß der Drainagekörper 28 mit feinen Bodenbestandteilen zugeschlemmt wird. An der Unter- bzw. Außenseite der Vliesschicht 29' ist noch eine Verankerungsschicht 30 angebracht, die aufgrund einer groben offenen Struktur in den Boden eindringen bzw. eine erhöhte Reibung zwischen der Platte und dem Boden bewirken kann.

Das in den Drainagekörper 28 eingedrungene Wasser wird nach oben abgeführt. Hierzu dient der Drainagekörper 28

0048959

selbst, wenn er entsprechend Fig. 6, linker Teil über die
Bodenoberfläche des schematisch dargestellten Bodens 31 an
der Seite der Platte hochgezogen ist, die gemäß dieser Darstellung fast vollständig in den Boden eingelassen ist. Der
Wasserableitung kann aber auch eine Ableitungsbohrung 32
dienen, welche an den Drainagekörper 28 angeschlossen ist.

Die Bewehrungsschicht 23 kann, gegebenenfalls ohne Drainagekörper, bei entsprechender Belastung auch oberhalb des Betons
der Platte angebracht werden. Von Bedeutung ist, daß die
Bewehrung in Bezug auf den Beton außenliegt und damit an der
Stelle der maximalen Plattenbelastungen. Es ist nicht erforderlich, daß die Bewehrung 23 an allen Stellen der Platte
bzw. des Gründungselementes gleich stark ist. Vielmehr genügt
es, daß die maximal erforderliche Stärke an den entsprechenden
Stellen vorgesehen ist und z. B. im Bereich der Bodendübel
bzw. -Pfähle eine entsprechend verringerte Bewehrung bzw.
lediglich ein Drainagekörper vorhanden ist. Es kann von besonderer Bedeutung sein, daß ein Drainagekörper 28 auch im
Bereich des Pfahles vorhanden ist und mit einem horizontalen
Drainagekörper in wasserleitender Verbindung steht um eine
für die Gründung optimale Drainage zu erreichen.

0048959

Patentansprüche

1. Lastaufnehmendes Gründungselement, insbesondere aus Stahlbeton, das in feuchten Baugrund einzubringen oder zu errichten ist, d a d u r c h g e k e n n - z e i c h n e t, daß es in einem an den Baugrund angrenzenden Bereich einen gegen chemische und biologische Zersetzung widerstandsfähigen Drainagekörper hat.

2. Gründungselement nach Anspruch 1, d a d u r c h g e k e n n z e i c h n e t, daß es ein Schutzrohr mit einem wasserdurchlässigen Außenrohrmantel (3) besitzt und in einen zwischen diesem und dem insbesondere als Pfahl ausgebildeten Gründungselement vorhandenen Zwischenraum der Drainagekörper als Füllung (4) offenporiger Struktur vorhanden ist.

3. Gründungselement nach Anspruch 1 oder 2, d a d u r c h g e k e n n z e i c h n e t, daß zwischen dem Drainagekörper bzw. der Füllung (4) und dem Gründungselement ein wasserundurchlässiger Innenrohrmantel (1) angeordnet ist.

0048959

4. Gründungselement nach einem der Ansprüche 1 bis 3, d a d u r c h   g e k e n n z e i c h n e t, daß die zwischen dem Innen- und Außenrohrmantel (1, 3) vorhandene Füllung (4) offenporig erhärtetes Polyurethanharz, vorzugsweise aus durch Reaktion eines Polyalkohols mit einem Isocyanat entstandenes, oder ein anderes Kunstharzbindemittel enthält.

5. Gründungselement nach einem der Ansprüche 1 bis 4, d a d u r c h   g e k e n n z e i c h n e t, daß die Füllung (4) aus offenporig erhärtetem Polyurethan oder anderem Kunstharzbindemittel bzw. Kunstharzmörtel und körnigen Mineralstoffen besteht.

6. Gründungselement nach einem der Ansprüche 1 bis 5, d a d u r c h   g e k e n n z e i c h n e t, daß der Innen- und/oder Außenrohrmantel (1 bzw. 3) aus insbesondere armiertem Kunststoff, z.B. aus glas-, carbonfaser- oder aromatisches polyamidfaserverstärktem Polyäthylen, Polyester, Epoxyd- oder Polyurethanharz bestehen.

7. Gründungselement nach einem der Ansprüche 1 bis 6, d a d u r c h   g e k e n n z e i c h n e t, daß es im Bereich seines Drainagekörpers oder die Füllung (4) enthaltenden Zwischenraums mit Injektionskanälen (5) versehen ist, die in bestimmten Abständen durch einen Außenrohrmantel (3) hindurchgehen und auch einen eine Gründungspfahlspitze aufnehmenden Bereich (7) des Innenrohrmantels (1) durchsetzen können.

0048959

8. Gründungselement nach einem der Ansprüche 1 bis 7, d a - d u r c h   g e k e n n z e i c h n e t, daß das Schutz- rohr als Außenrohrmantel (1) mindestens eine wasserdurchlässige mikroporige Filtervliesschicht und als Füllung (4) offenporiger Struktur mindestens einen innerhalb dieser Vliesschicht angeordneten, damit zu einem Bauelement verbundenen gröberporigen Drainkörper hat und bedarfsweise von einer weiteren solchen Vliesschicht mit Drainkörper umgeben ist, oder daß ein doppelwandiges Schutzrohr zusätzlich von einer solchen Vliesschicht mit Drainkörper umgeben ist.

9. Gründungselement nach einem der Ansprüche 1 bis 8, d a - d u r c h   g e k e n n z e i c h n e t, daß das Außenmantelrohr (3) am Außenumfang mit einer Profilierung, insbesondere in Form eines Schraubengewindes (8) versehen ist.

10. Gründungselement nach einem der Ansprüche 1 bis 8, d a d u r c h   g e k e n n z e i c h n e t, daß als Außenrohrmantel (3) die äußere Hüllschicht der offenporigen Füllung (4) dient.

11. Gründungselement nach einem der Ansprüche 1 bis 10, d a d u r c h   g e k e n n z e i c h n e t, daß in das Schutzrohr (1) ein sich als isotroper Körper verhaltender Beton eingefüllt ist, der entweder zement- und/oder kunstharzgebunden ist.

12. Gründungselement nach Anspruch 1, welches als Platte, Streifen od. dgl. und insbesondere mit Bodendübeln oder -Pfählen ausgebildet ist, d a d u r c h   g e k e n n - z e i c h n e t , daß an seiner Unter- oder Außenseite (22) eine oder mehrere kunstfaserverstärkte Kunstharzschichten (25) vorhanden sind, an deren Außenseite (27) ein beidseitig vliesbeschichteter Drainagekörper (28) angeordnet ist.

13. Verfahren zur Herstellung eines Schutzrohres nach einem der Ansprüche 1 bis 6 oder 8, 9, d a d u r c h   g e - k e n n z e i c h n e t , daß in ein im Baugrund durch Aushub oder einen Stahlrammpfahl hergestelltes Aufnahmeloch von dem Außenrohrmantel etwa entsprechendem Durchmesser das Außenmantelrohr und das gegebenenfalls durch Distanzhalter abzustützende Innenmantelrohr eingebracht und danach in den zwischen den beiden Mantelrohren vorhandenen Zwischenraum die offenporig erhärtende Füllmasse eingefüllt wird.

14. Die gruppenweise Verwendung von Gründungselementen nach einem oder mehreren der Ansprüche 1 bis 12 zur Stabili- sierung bewegungsgefährdeter Böden.

½

0048959

Fig.5

Fig.4

Fig.3

Fig.2

Fig.1

0048959

20  32  24  26  25  29  28  29'  30  27  22  23  21  31

FIG.6